# EUROPÄISCHE PATENTSCHRIFT

(11) **EP 3 485 318 B1**
(45) Veröffentlichungstag und Bekanntmachung des Hinweises auf die Patenterteilung: **18.02.2026**
(21) Anmeldenummer: 17722476.3
(22) Anmeldetag: 12.05.2017
(51) Int. Cl.: G02B 27/01, G02B 27/00, B32B 17/10, B60K 35/23, B60K 35/234, B60K 35/90, G02B 5/20

(54) **HEAD-UP-DISPLAY SYSTEM ZUR DARSTELLUNG VON BILDINFORMATIONEN UND DESSEN KALIBRIERUNG**
HEAD-UP DISPLAY SYSTEM FOR DISPLAYING IMAGE DATA AND ITS CALIBRATION
SYSTEME D'AFFICHAGE TETE HAUTE DESTINE A PRESENTER DES INFORMATIONS D'IMAGE ET SON CALIBRATION

(30) Priorität: 18.07.2016 EP 16179955
(43) Veröffentlichungstag der Anmeldung: 22.05.2019
(73) Patentinhaber: Saint-Gobain Sekurit France, 60150 Thourotte (FR)
(72) Erfinder: ARNDT, Martin, 52066 Aachen (DE); PATSCHGER, Marek, 71229 Leonberg (DE); BABAJANI, Ninet, 52062 Aachen (DE)
(74) Vertreter: Gebauer, Dieter Edmund
(86) Internationale Anmeldenummer: PCT/EP2017/061428
(87) Internationale Veröffentlichungsnummer: WO 2018/015039

(56) Entgegenhaltungen:
- WO-A1-2016/091435
- DE-A1- 102005 037 797
- DE-A1- 102007 021 230
- DE-A1- 102013 219 556
- DE-A1- 102014 224 302
- US-A1- 2002 130 953
- US-A1- 2011 267 700
- US-A1- 2015 062 345
- US-A1- 2015 321 950
- US-B1- 7 205 964

## Beschreibung

Die Erfindung betrifft ein Head-Up-Display System, ein Verfahren zur Kalibrierung des Head-Up-Display Systems und dessen Verwendung.

Fahrzeuge, insbesondere Personenkraftwagen (PKW), werden immer häufiger mit sogenannten Head-Up-Displays (HUDs) ausgestattet. Head-Up-Display sind zur Darstellung von Bildinformationen für einen Betrachter bzw. Fahrer vorgesehen. Mit einem Projektor als Bildgeber, beispielsweise im Bereich des Armaturenbretts oder im Dachbereich, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

Üblicherweise bestehen Windschutzscheiben aus zwei Glasscheiben, welche über eine thermoplastische Folie miteinander laminiert sind. Sollen die Oberflächen der Glasscheiben in einem Winkel angeordnet werden, so ist es üblich, eine thermoplastische Folie mit nichtkonstanter Dicke zu verwenden. Man spricht auch von einer keilförmigen Folie oder Keilfolie. Der Winkel zwischen den beiden Oberflächen der Folie wird als Keilwinkel bezeichnet. Der Keilwinkel kann über die gesamte Folie konstant sein (lineare Dickenänderung) oder sich positionsabhängig ändern (nichtlineare Dickenänderung).

Bei dem vorstehend beschriebenen Head-Up-Display tritt das Problem auf, dass das Projektorbild an beiden Oberflächen der Windschutzscheibe reflektiert wird. Dadurch nimmt der Fahrer nicht nur das gewünschte Hauptbild wahr, welches durch die Reflexion an der innenraumseitigen Oberfläche der Windschutzscheibe hervorgerufen wird (Primärreflexion). Der Fahrer nimmt auch ein leicht versetztes, in der Regel intensitätsschwächeres Nebenbild wahr, welches durch die Reflexion an der außenseitigen Oberfläche der Windschutzscheibe hervorgerufen wird (Sekundärreflexion). Dieses Problem wird gemeinhin dadurch gelöst, dass die reflektierenden Oberflächen mit einem bewusst gewählten Winkel zueinander angeordnet werden, so dass Hauptbild und Nebenbild (Geisterbild) überlagert werden, wodurch das Nebenbild (Geisterbild) nicht mehr störend auffällt.

Es ist auch bekannt, Windschutzscheiben mit transparenten, elektrisch leitfähigen Beschichtungen zu versehen. Diese Beschichtungen können als IR-reflektierende Beschichtungen wirken, um die Erwärmung des Fahrzeuginnenraums zu verringern und dadurch den thermischen Komfort zu verbessern. Die Beschichtungen können aber auch als beheizbare Beschichtungen verwendet werden, indem sie mit einer Spannungsquelle verbunden werden, so dass ein Strom durch die Beschichtung fließt. Geeignete Beschichtungen enthalten leitfähige, metallische Schichten auf Basis von Silber.

Windschutzscheiben mit leitfähigen Beschichtungen im Inneren des Verbundglases weisen im Zusammenhang mit Head-Up-Displays das Problem auf, dass durch die leitfähige Beschichtung eine weitere reflektierende Grenzfläche für das Projektorbild gebildet wird. Dies führt zu einem weiteren unerwünschten Nebenbild, welches auch als Schichtreflexion oder Schicht-"Ghost" bezeichnet wird.

DE102014005977 offenbart eine HUD-Projektionsanordnung mit einer beschichteten Windschutzscheibe. Zur Vermeidung von Störbildern wird vorgeschlagen, bei einem scharfen virtuellen Bild die infrarot-nahen Lichtanteile aus den bildgebenden Lichtstrahlen heraus zu filtern. Diese Lösung hat allerdings den Nachteil, dass der Projektor zusätzliche Infrarotabsorptionselemente im Strahlengang aufweisen muss.

DE 102005 037797 A1, US 2011/267700 A1 und DE 10 2013 219556 A1 kann jeweils ein Head-Up-Display System entnommen werden, bei denen ein Korrekturbild erzeugt wird.

Der Erfindung liegt die Aufgabe zugrunde, ein Head-Up-Display System bereitzustellen, welches eine Verbundscheibe mit einer elektrisch leitfähigen Beschichtung aufweist, wobei eine Störwirkung der durch die Beschichtung erzeugten Schichtreflexion möglichst minimiert werden soll.

Die Aufgabe der vorliegenden Erfindung wird erfindungsgemäß durch ein Head-Up-Display System gemäß Anspruch 1 gelöst. Bevorzugte Ausführungen gehen aus den Unteransprüchen hervor.

Das erfindungsgemäße Head-Up-Display (HUD) System zur Darstellung von Bildinformationen für einen Betrachter umfasst einen Bildgeber zur Emission eines ersten Bildes, sowie eine einen Teilbereich einer Verbundscheibe umfassende Projektionsfläche zum Umlenken einer Projektion eines Bildes. Das erfindungsgemäße Head-Up-Display System umfasst auch Kalibrierungsmittel, die zur Feststellung einer Abweichung zwischen dem ersten Bild und der Projektion des Bildes vorgesehen sind. Die Kalibrierungsmittel weisen Erfassungsmittel auf, die zur Erfassung einer Reflexionseigenschaften der Verbundscheibe vorgesehen sind. Der Bildgeber ist zur Generierung eines Korrekturbildes in Abhängigkeit der Abweichung vorgesehen.

Ein Korrekturbild ist ein Bild, das durch den Bildgeber emittiert wird und bei dem eine elektronische Vorverzerrung oder eine Verformung des ersten Bildes stattgefunden hat. Die Verzerrung oder Verformung von Bildern basiert auf der zuvor gemessenen Abweichung zwischen dem ersten Bild und der Projektion dieses ersten Bildes. Durch die Verzerrung oder Verformung des Korrekturbildes wird die gemessene Abweichung kompensiert. Eine derartige elektronische Verzerrung wird auch als Vorverzerrung oder Warping bezeichnet. Mit anderen Worten ist das Korrekturbild ein Bild, bei dem eine elektronische Vorverzerrung des ersten Bildes stattgefunden hat. Eine derartige Kompensation der störenden Reflexion verbessert deutlich die Schärfe des projizierten Bildes.

Unter einem Bildgeber kann ein bildgebendes Gerät wie ein Projektor, LCD-Display, TFT-Display verstanden werden. Unter Bildinformationen werden im Sinne der Erfindung Informationen verstanden, die dem Betrachter in Form von Bildern dargestellt werden. Ein Bild kann digitale Bilddaten aufweisen.

Die Kalibrierungsmittel weisen Erfassungsmittel auf, die zur Bestimmung der Reflexionseigenschaften dienen. Die Kalibrierungsmittel weisen eine Softwarekomponente zur Ermittlung einer Verzerrung des ersten Bildes auf. Die Softwarekomponente kann dabei auf einer externen, hardwaremäßigen Steuereinheit, z.B. Computer, gespeichert sein. Die Steuereinheit kann eine Ein-/Ausgabeeinheit aufweisen, über die ein Benutzer das Head-Up-Display System mit den Kalibrierungsmittel ansteuern kann. Die Softwarekomponente ist zur Steuerung der Erfassungsmittel, des Bildgebers, sowie zur Speicherung von Bildaufnahmen und Auswertung der Bilddaten vorgesehen. Dies hat den Vorteil, dass das emittierte Bild derart beeinflusst wird, dass sich das projizierte Bild durch einen deutlichen und qualitativ besseren Eindruck auszeichnet.

Diese Bilddaten, insbesondere Bilddaten bezüglich der Verzerrung, werden an den Bildgeber übertragen. Hierzu weist der Bildgeber eine Schnittstelle auf, an die die Bilddaten von der Steuereinheit gesendet werden. Eine solche Schnittstelle lässt sich am Bildgeber leicht implementieren und die Bilddaten können in einer einfachen Weise dem Bildgeber zur Verfügung gestellt werden.

Die Erfassungsmittel können ein Speichermedium umfassen, in dem die Bilddaten der einzelnen Bilder gespeichert werden können. Die Kalibrierungsmittel können auch eine fototechnische Vorrichtung zur Aufnahme von Bildern aufweisen. Die Vorrichtung zur Aufnahme von Bildern kann als eine einzelne Kamera oder als ein Kamerasystem mit mehreren Kameras ausgebildet sein. Insbesondere dient die Softwarekomponente zur Steuerung der Vorrichtung zur Aufnahme, zur Speicherung von Bildern und zur Auswertung der von der Vorrichtung zur Aufnahme erfassten Bilder. Die Auswertung der erfassten Bilder erfolgt vorzugsweise mittels einer Matrixberechnung.

Vorteilhafterweise ist der Bildgeber zur Generierung des Korrekturbildes vorgesehen. Insbesondere kann das Korrekturbild als eine zumindest teilweise Überlappung der Primärreflexion, Sekundärreflexion und/oder der Schichtreflexion (Ghost) ausgebildet sein. Dies hat den Vorteil, dass das projizierte Bild eine deutliche Tiefenwirkung erhält.

Die Verbundscheibe umfasst eine Außenscheibe und eine Innenscheibe, die über eine thermoplastische Zwischenschicht miteinander verbunden sind. Dabei weist die zur Zwischenschicht hingewandte Oberfläche der Innenscheibe eine transparente, elektrisch leitfähige Beschichtung auf. Die elektrisch leitfähige Beschichtung kann zumindest eine metallische und mehrere dielektrische Schichten aufweisen, durch die im Wesentlichen die Reflexionseigenschaften der Verbundscheibe, insbesondere einer Reflexionsfarbe der Verbundscheibe, bestimmt werden. Die Anzahl, Dicke, und Zusammensetzung der Schichten kann die Reflexionsfarbe der Verbundscheibe beeinflussen. Der Reflexionsgrad der Beschichtung ist über das Farbspektrum nicht konstant, sondern weist in einem oder mehreren Wellenlängenbereichen des sichtbaren Spektrums ein Maximum auf. Dadurch wird eine Farbveränderung von weißem Licht zu einer spezifischen hin Farbe bewirkt, die als Reflexionsfarbe bezeichnet wird.

Die Kalibrierungsmittel sind derart ausgebildet, dass die Generierung des Korrekturbildes in Abhängigkeit der Reflexionsfarbe der Verbundscheibe oder der Dicke der Innenscheibe erfolgt. Eine Farbe aus dem Farbspektrum kann selektiert werden, indem eine Wellenlänge des Lichts verstärkt emittiert wird. Aufgrund der Reflexionsfarbe selektiert die Steuereinheit einen Wellenlängenbereich des Lichts, der verstärkt im Korrekturbild emittiert wird und leitet diese Bilddaten an den Bildgeber weiter. Die Farbe des ersten Bildes wird derart verändert, dass das Reflexionsverhalten der Beschichtung kompensiert wird. Beispielsweise können farbgetreu (z.B. weiße) Zeichen im Korrekturbild wiedergegeben werden, indem der Bildgeber eine komplementäre (z.B. blaue) Farbe zu der Reflexionsfarbe (z.B. rot) der Verbundscheibe verstärkt emittiert. Die Farbe des Korrekturbildes wird gezielt auf die Reflexionsfarbe der Verbundscheibe angepasst.

Die Verbundscheibe kann als eine Fahrzeug-Windschutzscheibe ausgebildet sein. Die Verbundscheibe ist dafür vorgesehen, in einer Öffnung, insbesondere einer Fensteröffnung eines Fahrzeugs, den Innenraum gegenüber der äußeren Umgebung abzutrennen. Mit Innenscheibe wird im Sinne der Erfindung die dem Innenraum (Fahrzeuginnenraum) zugewandte Scheibe der Verbundscheibe bezeichnet. Mit Außenscheibe wird die der äußeren Umgebung zugewandte Scheibe bezeichnet.

Die Dicke der Zwischenschicht ist im vertikalen Verlauf zwischen der Unterkante und der Oberkante der Verbundscheibe zumindest abschnittsweise veränderlich. Mit "abschnittsweise" ist hier gemeint, dass der vertikale Verlauf zwischen Unterkante und Oberkante der Verbundscheibe zumindest einen Abschnitt aufweist, in dem sich die Dicke der Zwischenschicht ortsabhängig ändert. Die Dicke kann sich aber auch in mehreren Abschnitten ändern oder im gesamten vertikalen Verlauf. Mit vertikalem Verlauf ist der Verlauf zwischen Unterkante und Oberkante mit Verlaufsrichtung im Wesentlichen senkrecht zu besagten Kanten bezeichnet. Eine Zwischenschicht mit veränderlicher Dicke wird typischerweise als Keilfolie bezeichnet. Der Winkel zwischen den beiden Oberflächen der Zwischenschicht wird als Keilwinkel bezeichnet. Ist der Keilwinkel nicht konstant, so sind zu seiner Messung an einem Punkt die Tangenten an die Oberflächen heranzuziehen.

Wird zur Erzeugung einer Projektion eines Bildes der Bildgeber auf die Verbundscheibe gerichtet, so wird das gewünschte erste virtuelle Bild durch Reflexion an der innenraumseitigen, von der Zwischenschicht abgewandten, Oberfläche der Innenscheibe erzeugt. Der nichtreflektierte Teilstrahl verläuft durch die Verbundscheibe hindurch und wird an der außenseitigen, von der Zwischenschicht abgewandten, Oberfläche der Außenscheibe ein weiteres Mal reflektiert. Dadurch wird ein zweites virtuelles Bild (Geisterbild) erzeugt. Im Falle paralleler Scheibenoberflächen würden Bild und Geisterbild versetzt zueinander erscheinen, was für den Betrachter störend ist. Durch den Keilwinkel wird das zweite virtuelle Bild im Wesentlichen mit dem ersten virtuellen Bild räumlich überlagert, so dass der Betrachter nur noch ein einziges Bild wahrnimmt.

Die Verbundscheibe weist eine transparente, elektrisch leitfähige Beschichtung auf der zur Zwischenschicht hingewandten Oberfläche der Innenscheibe auf. Durch die Beschichtung wird eine weitere Grenzfläche mit signifikanter Änderung des Brechungsindex erzeugt. Es entsteht also eine weitere reflektierende Grenzfläche für den Lichtstrahl des Bildgebers. Die Beschichtung erzeugt dadurch ein weiteres unerwünschtes Geisterbild, die sogenannte Schichtreflexion.

Unter einer transparenten Beschichtung wird eine Beschichtung verstanden, die eine mittlere Transmission im sichtbaren Spektralbereich von mindestens 80 % aufweist, die also die Durchsicht durch die Scheibe nicht wesentlich einschränkt.

Die Innenscheibe und die Außenscheibe weisen asymmetrische Dicken auf. Eine asymmetrische Dickenkombination ist eine Anordnung von Innen- und Außenscheibe, bei der die beiden Scheiben unterschiedlich dick sein können. Weitere asymmetrische Dickenkombinationen (Innenscheibe/Außenscheibe) können folgende Werte aufweisen: 1,6 mm/2,1 mm; 1,4 mm/ 1,8 mm; 1,4 mm/2,1 mm; 2,1 mm/2,6 mm; 1,0 mm/ 1,4mm.

Die Innenscheibe weist vorzugsweise eine Dicke von kleiner als 1,6 mm auf, so dass die Gesamtdicke der Verbundscheibe mindestens 4,0 mm bis 6,0 mm, bevorzugt 4,4 mm, betragen kann. Aufgrund des erfindungsgemäßen Keilwinkels ist die Dicke der Verbundscheibe nicht konstant. Die Gesamtdicke im Sinne der Erfindung wird an der dünnsten Seitenkante gemessen, also typischerweise an der Unterkante der Verbundscheibe. Die Gesamtdicke ist also die minimal auftretende Gesamtdicke.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn sie als Scheibe für Busse, Züge oder Traktoren vorgesehen ist.

Der Bereich der Verbundscheibe, der dafür vorgesehen ist, mit dem Projektor bestrahlt zu werden, um das virtuelle Bild zu erzeugen, wird auch als HUD-Bereich der Verbundscheibe bezeichnet. In dem HUD-Bereich der Verbundscheibe kann vorteilhafterweise die Geometrie der Verbundscheibe einen vertikalen Krümmungsradius zwischen 5 und 15 Metern, sowie einen horizontalen Krümmungsradius zwischen 1 und 5 Metern aufweisen.

Das Head-Up-Display System kann vorzugsweise ein Optikmodul zur Umlenkung des vom Bildgeber generierten Korrekturbildes in Richtung der Verbundscheibe umfassen. Das Optikmodul kann als ein Kombinierer (Combiner), Spiegel-, Prismen- und/oder Linsenvorrichtung ausgebildet sein.

Die Erfindung umfasst außerdem ein Verfahren zur Kalibrierung eines Head-Up-Display Systems, bei welchem ein erstes Bild durch einen Bildgeber emittiert wird, das erste Bild von zumindest einem Teilbereich einer Verbundscheibe als Projektionsfläche umgelenkt wird und als Projektion des Bildes durch Kalibrierungsmittel erfasst wird. Dabei wird eine Abweichung zwischen dem ersten Bild und der Projektion des Bildes durch die Kalibrierungsmittel gemessen. In Abhängigkeit der Abweichung generiert der Bildgeber ein Korrekturbild. Das Korrekturbild ist ein Bild, bei dem eine elektronische Vorverzerrung, Verformung und/oder Färbung des ersten Bildes stattgefunden hat.

Die Erfindung umfasst außerdem die Verwendung eines erfindungsgemäßen Head-Up-Displays Systems in einem Kraftfahrzeug, bevorzugt einem Personenkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Verbundscheibe als Bestandteil eines erfindungsgemäßen Head-Up-Display Systems,
- Fig. 2: ein erfindungsgemäßes Head-Up-Display System,
- Fig. 3: ein Flussdiagramm einer Ausführungsform des erfindungsgemäßen Verfahrens und
- Fig. 4: eine schematische Darstellung eines Korrekturbildes.

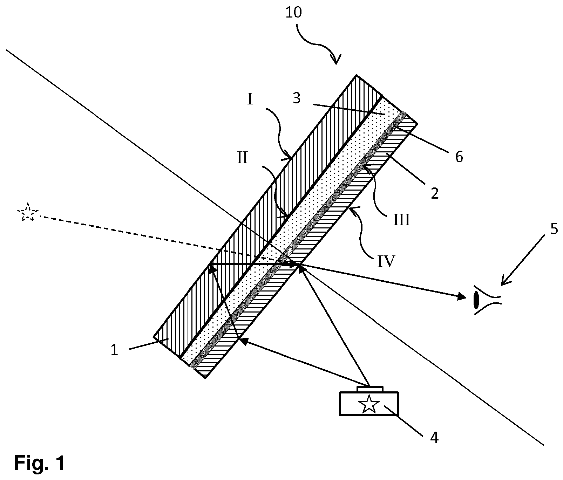

Figur 1 zeigt eine Verbundscheibe 10 als Bestandteil eines erfindungsgemäßen Head-Up-Display Systems, welche aus einer Außenscheibe 1 und einer Innenscheibe 2 besteht, die über eine thermoplastische Zwischenschicht 3 miteinander verbunden sind. Die Verbundscheibe 10 ist als Windschutzscheibe eines Kraftfahrzeugs vorgesehen, welches mit einem Head-Up-Display ausgestattet ist. Die Außenscheibe 1 ist in Einbaulage der äußeren Umgebung zugewandt, die Innenscheibe 2 dem Fahrzeuginnenraum.

Weiterhin zeigt Fig. 1 einen Projektor 4 als Bildgeber des HUD-Systems, welcher auf einen Teilbereich der Verbundscheibe 10 gerichtet ist. In dem Teilbereich (HUD-Bereich) können durch den Projektor 4 Bilder erzeugt werden, welche vom Betrachter 5 (Fahrzeugfahrer) als virtuelle Bilder auf der von ihm abgewandten Seite der Verbundscheibe 10 wahrgenommen werden. Der Keilwinkel im Teilbereich führt zu gegeneinander geneigten Oberflächen I, IV der Außenscheibe 1 und der Innenscheibe 2. Die dünne Innenscheibe 2 führt zur Überlagerung der durch die elektrisch leitfähige Beschichtung 6 hervorgerufenen Schichtreflexion mit der an der innenraumseitigen Oberfläche der Windschutzscheibe hervorgerufen Primärreflexion, sowie der an der außenseitigen Oberfläche der Windschutzscheibe hervorgerufen Sekundärreflexion, welche folglich nicht mehr getrennt voneinander wahrnehmbar sind.

Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die innenraumseitige Oberfläche II der Außenscheibe 1 ist über die Zwischenschicht 3 mit der außenseitigen Oberfläche III der Innenscheibe 2 verbunden.

Die Dicke der Zwischenschicht 3 nimmt im vertikalen Verlauf von der Unterkante zur Oberkante der Verbundscheibe stetig zu. Die Dickenzunahme ist in der Figur der Einfachheit halber linear dargestellt, kann aber auch komplexere Profile aufweisen. Die Zwischenschicht 3 ist aus einer einzelnen Folie aus PVB ausgebildet (eine sogenannte Keilfolie mit veränderlicher Dicke). Der Keilwinkel α beträgt 0,25 mrad bis 0,8 mrad, vorzugsweise 0,35 mrad bis 0,65 mrad. Bei HUD-Systemen mit großer Bildweite wie z.B. einem Augmented-Reality (AR)-HUD-System, werden auch Keilwinkel von 0,1 mrad bis 0,3 mrad verwendet. Als AR-HUD-System werden HUD-Systeme bezeichnet, die mit einer computergestützten Erweiterung der Realitätswahrnehmung eines Nutzers arbeiten.

Für einen Keilwinkel von 0,5 mrad und einer Verbundscheibe von einer Höhe von 1 Meter, also einer durchschnittlichen Höhe einer PKW-Windschutzscheibe, sind das ca. 0,5 mm Dickenänderung (z.B. 0,76 mm an der Unterkante und 1,26 mm an der Oberkante der Verbundscheibe). Eine Aufdickung der Folie hängt neben dem Keilwinkel auch von der Scheibenhöhe ab. Bei einer bevorzugten Glaskombination von Innenscheibe/Außenscheibe von 1,6 mm/2,1 mm wäre die Gesamtglasdicke 4,46 mm an der Unterkanterkante und 4,96 mm an der Oberkante der Verbundscheibe.

Durch die keilförmige Ausbildung der Zwischenschicht 3 werden die beiden virtuellen Bilder, die durch Reflexion des Projektorbildes an den Oberfläche I und IV erzeugt werden, miteinander überlagert. Die Sekundärreflexion erscheint daher nicht versetzt zur Primärreflexion, so dass störende Reflexionen vermieden werden können. Vielmehr entsteht durch die Schichtreflexion ein weiteres virtuelles Bild, das durch die Überlagerung mit der Primärreflexion und Sekundärreflexion in einem virtuellen Bild resultiert.

Die Verbundscheibe 10 weist außerdem eine elektrisch leitfähige Beschichtung 6 auf der außenseitigen Oberfläche III der Innenscheibe 2 auf. Die Beschichtung 6 ist IR-reflektierend und dafür vorgesehen, die Aufheizung des Fahrzeuginnenraums durch den IR-Anteil der Sonnenstrahlung zu verringern. Die Beschichtung 6 ist beispielsweise ein Dünnschichtstapel enthaltend zwei oder drei Schichten aus Silber und weitere dielektrische Schichten, die als Entspiegelungsschichten, Blockerschichten oder Oberflächenanpassungsschichten die optischen, elektrischen und/oder mechanischen Eigenschaften der Beschichtung optimieren. Die dielektrischen Schichten der leitfähigen Beschichtung 6 enthalten beispielsweise Siliziumnitrid, Siliziumoxid, Zinkoxid, Zinn-Zink-Oxid und Aluminiumnitrid.

Die Beschichtung 6 stellt eine weitere reflektierende Grenzfläche im Inneren der Verbundscheibe 10 dar, an welcher das erfindungsgemäße Korrekturbild ein weiteres Mal reflektiert wird.

Die Innenscheibe 2 besteht aus Kalk-Natron-Glas und weist nur eine geringe Dicke auf von beispielsweise 1,6 mm. Dadurch wird sichergestellt, dass der räumliche Versatz zwischen Primärreflexion und Schichtreflexion gering ist, und sich die virtuellen Bilder derart überlagern, dass ein scharfes und farbgetreues Korrekturbild im Auge des Betrachters 5 entsteht.

Die Außenscheibe 1 besteht ebenfalls aus Kalk-Natron-Glas und weist eine deutlich größere Dicke auf von beispielsweise 2,1 mm. Dadurch wird gewährleistet, dass die Verbundscheibe 10 insgesamt eine ausreichende mechanische Stabilität, Bruchfestigkeit und Verwindungssteifigkeit aufweist.

Die Minimaldicke der Zwischenschicht 3 beträgt beispielsweise 0,76 mm (gemessen an der Unterkante U). Die Zwischenschicht 3 ist hier durch eine einzige, keilförmige PVB-Folie ausgebildet. Es ist aber auch ein mehrschichtiger Aufbau der Zwischenschicht 3 denkbar, beispielsweise eine 0,36 mm dicke PVB-Folie mit konstanter Dicke, eine 0,76 mm dicke PVB-Keilfolie und eine dazwischenliegende 0,05 mm dicke PET-Folie.

Die Gesamtdicke der Verbundscheibe 10 beträgt folglich etwa 4,5 mm. Die Gesamtdicke wird an der dünnsten Seitenkante, nämlich der Unterkante, gemessen.

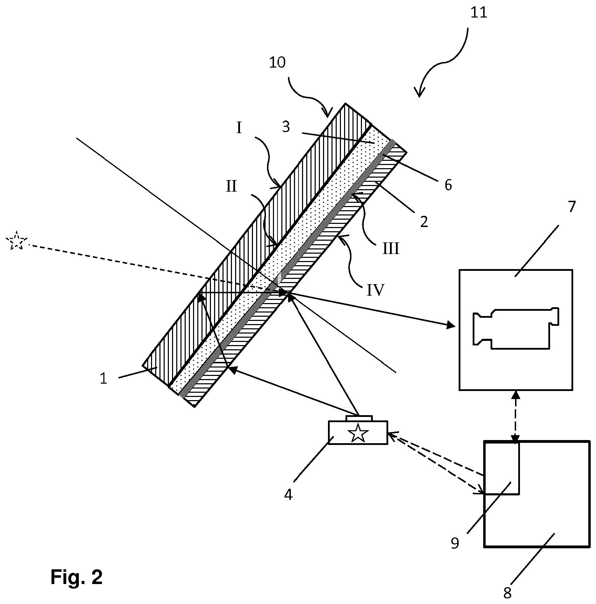

Figur 2 zeigt ein erfindungsgemäßes Head-Up-Display Systems mit Kalibrierungsmittel. Die Kalibrierungsmittel umfassen Erfassungsmittel 7 zur Erfassung einer Projektion des ersten Bildes und eine Steuereinheit 8 mit einer Softwarekomponente 9 zur Steuerung der Erfassungsmittel 7 und zur Auswertung der Projektion. Die Erfassungsmittel 7 sind ausgebildet als ein Kamerasystem mit mehreren Kameras zur Aufzeichnung der Projektion. Bilddaten der Aufzeichnung werden dann weitergeleitet an die Steuereinheit 8. Die Steuereinheit 8 ist ein Computer mit mehreren kompatiblen Schnittstellen, die zum Empfang von Bilddaten der Erfassungsmittel 7 und zum Austausch von Bilddaten mit dem Bildgerber geeignet sind. Derartige Schnittstellen sind drahtgebunden und/oder drahtlos und dazu geeignet, nach einem der folgenden Standards zu arbeiten: WLAN (Wi-Fi, IEEE 802.11), NFC oder Bluetooth. Weiterhin verfügt die Steuereinheit 8 über eine Benutzerschnittstelle, an der ein Benutzer des Head-Up-Display System mit dem Kalibrierungsmittel interagieren kann.

Der Projektor 4 emittiert ein erstes Bild, welches über die Verbundscheibe 10 als virtuelles Bild umgelenkt wird. Das Kamerasystem der Erfassungsmittel 7 erfasst das virtuelle Bild und speichert Bilddaten des virtuellen Bildes ab. Die Bilddaten werden dann über eine Schnittstelle an die Steuereinheit 8 weitergeleitet. Die Steuereinheit 8 empfängt die Bilddaten des virtuellen Bildes und vergleicht diese mit Bilddaten des vom Projektor 4 emittierten, ersten Bildes. Die Auswertung der Bilddaten erfolgt durch die Softwarekomponente 9 anhand von Matrixberechnung und wird in der Steuereinheit 8 gespeichert. Die Auswertung der Bilddaten wird an den Projektor 4 weitergeleitet.

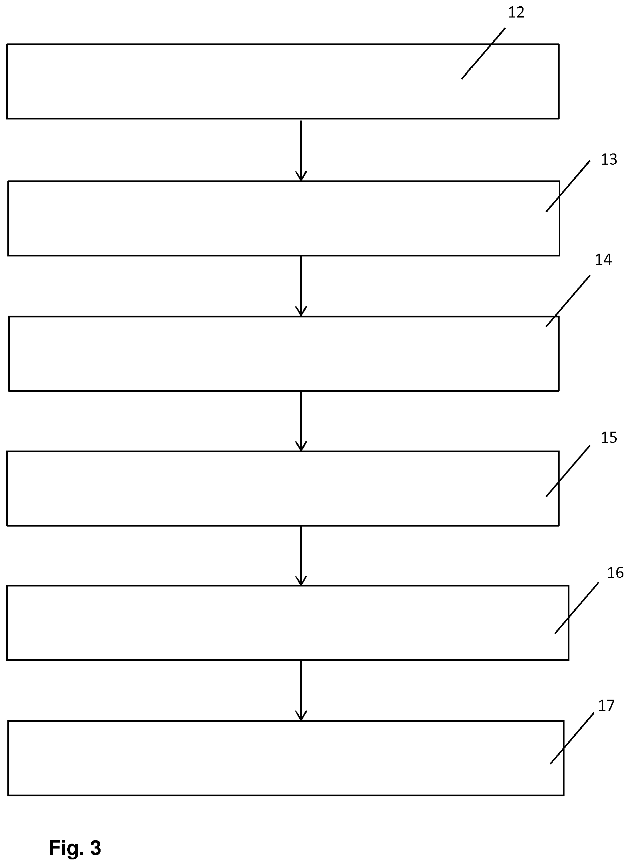

Fig. 3 zeigt ein Flussdiagramm eines Ausführungsbeispiels des erfindungsgemäßen Verfahrens zur Kalibrierung eines erfindungsgemäßen Head-Up-Display Systems.

In Schritt 12 des Verfahrens wird ein erstes Bild durch den Projektor 4 emittiert. Das erste Bild wird von zumindest einem Teilbereich einer Verbundscheibe als Projektionsfläche umgelenkt und als Projektion des ersten Bildes in Schritt 13 durch ein Kalibrierungsmittel erfasst. Die Kalibrierungsmittel bestehen aus einem Kamerasystem 7, das die Projektion des ersten Bildes aufnimmt und in Schritt 14 an die Steuereinheit 8 weiterleitet. Die Steuereinheit 8 kann als ein externer Computer mit einem Speichermedium ausgebildet sein. Die Steuereinheit 8 verfügt über eine Softwarekomponente 9, die in Schritt 15 die Projektion des ersten Bildes mit dem vom Projektor 4 emittierten Bild vergleicht und auswertet. Die Auswertung der Bilder in Form von Bilddaten erfolgt mittels der Softwarekomponente 9 anhand von Matrixberechnung. In Schritt 16 ergibt das Ergebnis der Auswertung eine Abweichung, die von der Steuereinheit 8 an den Projektor 4 weitergeleitet wird.

Die mit Kalibrierungsmittel gemessene Abweichung zwischen dem ersten Bild und der Projektion des ersten Bildes kann in einer Verzerrung, Verformung, Verfärbung oder Verzeichnung des ersten Bildes resultieren. Anhand der Abweichung generiert in Schritt 17 der Projektor 4 aus dem ersten Bild ein Korrekturbild. Das Korrekturbild ist ein Bild, bei dem eine elektronische Vorverzerrung, Verformung und/oder Färbung des ersten Bildes stattgefunden hat. Eine derartige Voreinstellung des Projektors 4 führt dazu, dass das Korrekturbild scharf und farbgetreu dargestellt wird. Die Informationen des virtuellen Bildes sind für den Betrachter klar und deutlich erkennbar.

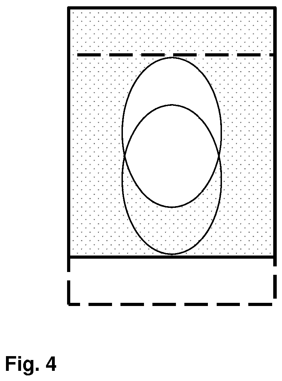

Figur 4 zeigt ein Ergebnis einer Auswertung. Die Auswertung kann ergeben, dass ein Design des ersten Bildes verändert wird. Das Korrekturbild ist dann derart ausgebildet, dass sich die Primär-, Sekundär- und die Schichtreflexion teilweise überlappen und im besten Fall berühren. Durch eine derartige Überlagerung der Reflexion kann beispielsweise eine kreisförmige Aussparung in einer Vollfläche dargestellt werden, indem vom Projektor 4 eine ovale Grundform als Korrekturbild emittiert wird. Durch die Überlagerung der ovalen Grundform mit der Sekundär- und der Schichtreflexion der ovalen Grundform entsteht beim Betrachter der visuelle Eindruck einer kreisförmigen Aussparung. Dabei können Bilder in die Sicht des Betrachters eingeblendet werden, die den Eindruck erwecken als seien sie ein Bestandteil der Umgebung des Betrachters. Besonders vorteilhaft ist die Anwendung des erfindungsgemäßen Head-Up-Display Systems bei einer Navigation des Betrachters bzw. Fahrers eines Fahrzeugs. Eine Navigationsrichtung kann als ein Richtungspfeil dargestellt werden, indem ein Bild des Richtungspfeils dem Fahrer in seine Blickrichtung projiziert wird und beim Fahrer der Eindruck entsteht als würde der Richtungspfeil auf seiner Fahrbahn liegen.

Für den Fall, dass der Projektor 4 keine zuvor durch die Kalibrierungsmittel erfasste Abweichung bei der Generierung eines Bildes berücksichtigt hat, wird das Bild an der Verbundscheibe reflektiert. Bei der Reflexion des Bildes an der Verbundscheibe entstehen durch die Primär-, Sekundär und Schichtreflexion drei virtuelle Bilder, die sich nicht passend überlagern. Für das Auge 5 des Fahrers würde dann ein unscharfes, nicht farbgetreues Bild entstehen, das unkenntliche Informationen enthält.

### Bezugszeichenliste:

- (1): Außenscheibe
- (2): Innenscheibe
- (3): thermoplastische Zwischenschicht
- (4): Projektor als Bildgeber
- (5): Betrachter / Fahrzeugfahrer
- (6): elektrisch leitfähige Beschichtung
- (7): Erfassungsmittel
- (8): Steuereinheit
- (9): Softwarekomponente
- (10): Verbundscheibe
- (11): Head-Up-Display System
- (12) bis (17): Verfahrensschritt

- (I): außenseitige, von der Zwischenschicht 3 abgewandte Oberfläche der Außenscheibe 1
- (II): innenraumseitige, zur Zwischenschicht 3 hingewandte Oberfläche der Außenscheibe 1
- (III): außenseitige, zur Zwischenschicht 3 hingewandte Oberfläche der Innenscheibe 2
- (IV): innenraumseitige, von der Zwischenschicht 3 abgewandte Oberfläche der Innenscheibe 2

## Patentansprüche

1. Head-Up-Display System (11) zur Darstellung von Bildinformationen für einen Betrachter, umfassend:
- eine Verbundscheibe (10), wobei die Verbundscheibe (10) eine Außenscheibe (1) und eine Innenscheibe (2), die über eine thermoplastische Zwischenschicht (3) miteinander verbunden sind, und eine transparente, elektrisch leitfähige Beschichtung (6) auf der zur Zwischenschicht (3) hingewandten Oberfläche (III) der Innenscheibe (2) umfasst,
- einen Bildgeber (4) zur Emission eines ersten Bildes,
- eine einen Teilbereich der Verbundscheibe (10) umfassende Projektionsfläche zum Umlenken einer Projektion des ersten Bildes, wobei
Kalibrierungsmittel (7, 8, 9) zur Feststellung einer Abweichung zwischen dem ersten Bild und der Projektion des ersten Bildes vorgesehen sind, die Erfassungsmittel (7) zur Erfassung von Reflexionseigenschaften der Verbundscheibe (10) aufweisen, wobei der Bildgeber (4) zur Generierung eines eine Vorverzerrung aufweisenden Korrekturbildes in Abhängigkeit der Abweichung vorgesehen ist, wobei die Kalibrierungsmittel (7, 8, 9) zur Bestimmung einer Reflexionsfarbe der Verbundscheibe (10) vorgesehen sind, wobei die Kalibrierungsmittel (7, 8, 9) eine Softwarekomponente (9) zur Ermittlung einer Verzerrung des ersten Bildes in Abhängigkeit der Reflexionsfarbe oder der Dicke der Innenscheibe (2) aufweisen, wobei der Bildgeber (4) eine Schnittstelle zur Übertragung von Bilddaten der Softwarekomponente (9) aufweist, und wobei der Bildgeber (4) mittels des ersten Bildes und der Verzerrung zur Generierung des Korrekturbildes vorgesehen ist.

2. Head-Up-Display System (11) nach Anspruch 1, **dadurch gekennzeichnet, dass** die Kalibrierungsmittel (7, 8, 9) eine Steuereinheit (8) umfassen, wobei die Steuereinheit (8) zur Selektion eines Wellenlängenbereichs des Lichts vorgesehen ist und der Bildgeber (4) zur Emission des Korrekturbildes in dem selektierten Wellenlängenbereich vorgesehen ist.

3. Head-Up-Display System (11) nach einem der Ansprüche 1 oder 2, **dadurch gekennzeichnet, dass** die Verbundscheibe (10) eine Fahrzeug-Windschutzscheibe ist.

4. Head-Up-Display System (11) nach einem der Ansprüche 1 bis 3, **dadurch gekennzeichnet, dass** ein Optikmodul zur Umlenkung des vom Bildgeber (4) generierten Korrekturbildes in Richtung der Verbundscheibe (10) vorgesehen ist.

5. Head-Up-Display System (11) nach einem der Ansprüche 1 bis 4, **dadurch gekennzeichnet, dass** die Projektionsfläche der Verbundscheibe (10) einen vertikalen Krümmungsradius zwischen 5 und 15 Metern und/oder einen horizontalen Krümmungsradius zwischen 1 und 5 Metern aufweist.

6. Head-Up-Display System (11) nach einem der Ansprüche 1 bis 5, **dadurch gekennzeichnet, dass** die Innenscheibe (2) und die Außenscheibe (1) asymmetrische Dicken aufweisen.

7. Verfahren zur Kalibrierung eines Head-Up-Display Systems (11) nach einem der Ansprüche 1 bis 6, bei welchem ein erstes Bild durch einen Bildgeber (4) emittiert wird, wobei das erste Bild von einem Teilbereich einer Verbundscheibe (10) als Projektionsfläche umgelenkt wird und als Projektion des Bildes durch Kalibrierungsmittel (7, 8, 9) erfasst wird, wobei eine Abweichung zwischen dem ersten Bild und der Projektion des ersten Bildes durch die Kalibrierungsmittel (7, 8, 9) gemessen wird und der Bildgeber (4) zur Generierung eines Korrekturbildes in Abhängigkeit der Abweichung vorgesehen ist.

8. Verwendung eines Head-Up-Displays Systems (11) nach einem der Ansprüche 1 bis 6 in einem Kraftfahrzeug, bevorzugt einem Personenkraftwagen.

## Claims

1. Head-up display system (11) for representing image information for an observer comprising:
- a composite pane (10), wherein the composite pane (10) comprises an outer pane (1) and an inner pane (2) joined to one another via a thermoplastic intermediate layer (3) and a transparent, electrically conductive coating (6) on the surface (III) of the inner pane (2) facing the intermediate layer (3),
- an image encoder (4) for emitting a first image,
- a projection area comprising a portion of the composite pane (10) for deflecting a projection of the first image, wherein
calibration means (7, 8, 9) are provided for ascertaining a deviation between the first image and the projection of the first image, which have capturing means (7) for capturing reflection properties of the composite pane (10), wherein the image encoder (4) is provided for generating a correction image having a predistortion as a function of the deviation, wherein the calibration means (7, 8, 9) are provided for determining a reflection color of the composite pane (10), wherein the calibration means (7, 8, 9) have a software component (9) for determining a distortion of the first image as a function of the reflection color or the thickness of the inner pane (2), wherein the image encoder (4) has an interface for transmitting image data of the software component (9), and wherein the image encoder (4) is provided for generating the correction image by means of the first image and the distortion.

2. Head-up display system (11) according to claim 1, **characterized in that** the calibration means (7, 8, 9) include a control unit (8), wherein the control unit (8) is provided for selecting a wavelength range of light, and the image encoder (4) is provided for emitting the correction image in the selected wavelength range.

3. Head-up display system (11) according to one of claims 1 or 2, **characterized in that** the composite pane (10) is a vehicle windshield.

4. Head-up display system (11) according to one of claims 1 through 3, **characterized in that** an optical module is provided for deflecting the correction image generated by the image encoder (4) in the direction of the composite pane (10).

5. Head-up display system (11) according to one of claims 1 through 4, **characterized in that** the projection area of the composite pane (10) has a vertical radius of curvature between 5 and 15 meters and/or a horizontal radius of curvature between 1 and 5 meters.

6. Head-up display system (11) according to one of claims 1 through 5, **characterized in that** the inner pane (2) and the outer pane (1) have asymmetric thicknesses.

7. Method for calibrating a head-up display system (11) according to one of claims 1 through 6, wherein a first image is emitted by an image encoder (4), wherein the first image is deflected by a portion of a composite pane (10) as a projection area and is captured as a projection of the first image by calibration means (7, 8, 9), wherein a deviation between the first image and the projection of the first image is measured by the calibration means (7, 8, 9) and the image encoder (4) is provided for generating a correction image as a function of the deviation.

8. Use of a head-up display system (11) according to one of claims 1 through 6 in a motor vehicle, preferably a passenger car.

## Revendications

1. Système d'affichage tête haute (11) destiné à représenter des informations d'image pour un observateur, comprenant:
- une vitre composite (10), dans lequel la vitre composite (10) comprend un panneau extérieur (1) et un panneau intérieur (2) reliés l'un à l'autre par une couche intermédiaire thermoplastique (3) et un revêtement transparent électriquement conducteur (6) sur la surface (III) du panneau intérieur (2) faisant face à la couche intermédiaire (3),
- un codeur d'image (4) pour émettre une première image,
- une zone de projection comprenant une partie de la vitre composite (10) pour dévier une projection de la première image, dans lequel
des moyens d'étalonnage (7, 8, 9) sont prévus pour déterminer un écart entre la première image et la projection de la première image, qui comportent des moyens de capture (7) pour capturer les propriétés de réflexion de la vitre composite (10), dans lequel le codeur d'image (4) est prévu pour générer une image de correction ayant une pré-distorsion en fonction de l'écart, dans lequel les moyens d'étalonnage (7, 8, 9) sont prévus pour déterminer une couleur de réflexion de la vitre composite (10), dans lequel les moyens d'étalonnage (7, 8, 9) comportent un composant logiciel (9) pour déterminer une distorsion de la première image en fonction de la couleur de réflexion ou de l'épaisseur du panneau intérieure (2), dans lequel le codeur d'image (4) comporte une interface pour transmettre des données d'image du composant logiciel (9), et dans lequel le codeur d'image (4) est prévu pour générer l'image de correction au moyen de la première image et de la distorsion.

2. Système d'affichage tête haute (11) selon la revendication 1, **caractérisé en ce que** les moyens d'étalonnage (7, 8, 9) comprennent une unité de commande (8), dans lequel l'unité de commande (8) est prévue pour sélectionner une gamme de longueurs d'onde de lumière, et le codeur d'image (4) est prévu pour émettre l'image corrigée dans la gamme de longueurs d'onde sélectionnée.

3. Système d'affichage tête haute (11) selon l'une des revendications 1 ou 2, **caractérisé en ce que** la vitre composite (10) est un pare-brise de véhicule.

4. Système d'affichage tête haute (11) selon l'une des revendications 1 à 3, **caractérisé en ce qu'**un module optique est prévu pour dévier l'image de correction générée par le codeur d'image (4) dans la direction de la vitre composite (10).

5. Système d'affichage tête haute (11) selon l'une des revendications 1 à 4, **caractérisé en ce que** la zone de projection de la vitre composite (10) a un rayon de courbure vertical compris entre 5 et 15 mètres et/ou un rayon de courbure horizontal compris entre 1 et 5 mètres.

6. Système d'affichage tête haute (11) selon l'une des revendications 1 à 5, **caractérisé en ce que** le panneau intérieure (2) et le panneau extérieure (1) ont des épaisseurs asymétriques.

7. Procédé de calibrage d'un système d'affichage tête haute (11) selon l'une des revendications 1 à 6, dans lequel une première image est émise par un codeur d'image (4), dans lequel la première image est déviée par une partie d'une vitre composite (10) en tant que zone de projection et est capturée en tant que projection de la première image par des moyens de calibrage (7, 8, 9), dans lequel un écart entre la première image et la projection de la première image est mesuré par les moyens d'étalonnage (7, 8, 9) et le codeur d'image (4) est prévu pour générer une image de correction en fonction de l'écart.

8. Utilisation d'un système d'affichage tête haute (11) selon l'une des revendications 1 à 6 dans un véhicule à moteur, de préférence une voiture particulière.
